# EUROPÄISCHE PATENTANMELDUNG

(11) **EP 3 576 376 A1**
(43) Veröffentlichungstag der Anmeldung: **04.12.2019**
(21) Anmeldenummer: 18174731.2
(22) Anmeldetag: 29.05.2018
(51) Int. Cl.: H04L 29/08, H04L 12/18

(54) **DATENÜBERMITTLUNG INNERHALB EINES INDUSTRIELLEN AUTOMATISIERUNGSSYSTEMS**

(71) Anmelder: Siemens Aktiengesellschaft, 80333 München (DE)
(72) Erfinder: Höme, Stephan, 91126 Schwabach (DE); Kerschbaum, Sven, 90768 Fürth (DE); Volkmann, Frank, 90475 Nürnberg (DE); Ziegler, Alexander, 76199 Karlsruhe (DE)

(57) **Zusammenfassung**

Zumindest ein erstes Automatisierungsgerät (301) innerhalb eines industriellen Automatisierungssystems macht Steuerungs-, Mess- und/oder Status-Daten umfassende Nutzdaten (33) zum Abruf oder Empfang durch mehrere zweite Automatisierungsgeräte (302) verfügbar. Das erste Automatisierungsgerät sendet zyklisch erste Informationen (31) zur Ankündigung verfügbarer Nutzdaten an eine vorgegebene erste Multicast-Adresse innerhalb des industriellen Automatisierungssystems. Die ersten Informationen (31) umfassen jeweils Angaben über das erste Automatisierungsgerät (301), eine zweite Multicast-Adresse, über die Angaben (32) zu verfügbaren Nutzdaten verfügbar gemacht werden, und zweite Informationen zur Adressierung von Nutzdaten, mit denen das erste Automatisierungsgerät (301) Nutzdaten (33) verfügbar macht. Die zweiten Automatisierungsgeräte (302) empfangen an die zweite Multicast-Adresse gesendete Angaben (32) zu verfügbaren Nutzdaten. Außerdem empfangen die zweiten Automatisierungsgeräte (302) anhand der ausgelesenen zweiten Informationen ausgewählte Nutzdaten.

## Beschreibung

Die vorliegende Erfindung betrifft ein Verfahren zur Datenübermittlung innerhalb eines industriellen Automatisierungssystems, ein Automatisierungsgerät zur Bereitstellung von Steuerungs-, Mess- bzw. Status-Daten umfassenden Nutzdaten und ein Automatisierungsgerät zum Abruf oder Empfang von Steuerungs-, Mess- bzw. Status-Daten umfassenden Nutzdaten.

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

MQTT (MQ Telemetry Transport oder Message Queue Telemetry Transport) ist ein Nachrichtenprotokoll für Maschine-zu-Maschine-Kommunikation (M2M), das für eine Übertragung von Nachrichten mit Telemetriedaten zwischen einem Publisher-Kommunikationsgerät und einem Subscriber-Kommunikationsgerät vorgesehen ist (siehe http://mqtt.org/). Dabei führt ein MQTT-Broker für Informationen zu sämtlichen Publishern und Subscribern von Telemetriedaten eine zentrale Datenbank. Über den MQTT-Broker werden durch Publisher bzw. Subscriber Befehle entgegen genommen bzw. Daten erfasst.

OPC Unified Architecture (OPC UA) definiert entsprechend IEC 62541 ein M2M-Kommunikationsprotokoll und ermöglicht, beispielsweise Maschinenparameter, Regelungsgrößen oder Messwerte semantisch zu beschreiben, so dass derartige Maschinendaten automatisiert ausgewertet werden können. Insbesondere umfasst OPC UA ein objekt-orientiertes Namensraum-Konzept einschließlich Metadaten zur Objektbeschreibung. Durch OPC UA Server wird ein Instanz- und Typsystem bereitgestellt, innerhalb dessen Clients navigieren und Informationen abrufen können. Darüber hinaus definiert OPC UA mehrere Discovery-Mechanismen zur Bekanntmachung von kompatiblen Automatisierungsgeräten und deren Funktionen bzw. Eigenschaften.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

Aus der älteren europäischen Patentanmeldung mit dem Anmeldeaktenzeichen 17194075.2 ist eine Steuerungseinheit eines industriellen Automatisierungssystems bekannt, die Funktionen mehrerer Kommunikationsgeräte steuert. Mittels erster Kommunikationsgeräte werden Informationen bzw. Dienste zur Nutzung an zweiten Kommunikationsgeräten bereitgestellt. In Speichereinheiten, die jeweils einem Netzinfrastrukturgerät zugeordnet sind, an das zumindest ein erstes oder zweites Kommunikationsgerät angeschlossen ist, werden jeweils Angaben zu Angeboten bzw. Anforderungen von Informationen bzw. Diensten angeschlossener Kommunikationsgeräte gespeichert. Die Steuerungseinheit erstellt anhand zueinander passender Angebote und Anforderungen Zuordnungen zwischen den ersten und zweiten Kommunikationsgeräten und ermittelt Pfade zwischen einander zugeordneten ersten und zweiten Kommunikationsgeräten. Aus den ermittelten Pfaden werden Weiterleitungsregeln für die zugeordneten Netzinfrastrukturgeräte abgeleitet.

In komplexen Automatisierungssystemen ist eine Ermittlung, durch welche Benutzer bzw. Geräte Dienste oder Informationen bereitgestellt bzw. genutzt werden, häufig sehr zeitaufwendig. Dies gilt auch, wenn ein einheitliches M2M-Kommunikationsprotokoll bei einem Datenaustausch zwischen Dienstanbietern (Publisher) und Dienstnutzern (Subscriber) verwendet wird.

Der vorliegenden Erfindung liegt die Aufgabe zugrunde, ein Verfahren zur Datenübermittlung innerhalb eines industriellen Automatisierungssystems anzugeben, das eine effiziente und zuverlässige Herstellung eines Datenaustauschs zwischen Dienstanbietern und Dienstnutzern in einem industriellen Automatisierungssystem ermöglicht, sowie geeignete Vorrichtungen zur Durchführung des Verfahrens zu schaffen.

Diese Aufgabe wird erfindungsgemäß durch ein Verfahren mit den in Anspruch 1 genannten Merkmalen, durch ein Automatisierungsgerät zur Bereitstellung von Steuerungs-, Mess- bzw. Status-Daten umfassenden Nutzdaten mit den in Anspruch 14 angegebenen Merkmalen und durch ein Automatisierungsgerät zum Abruf oder Empfang von Steuerungs-, Mess- bzw. Status-Daten umfassenden Nutzdaten mit den in Anspruch 15 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Datenübermittlung innerhalb eines industriellen Automatisierungssystems macht zumindest ein erstes Automatisierungsgerät, insbesondere ein Publisher, innerhalb des industriellen Automatisierungssystems Steuerungs-, Mess- bzw. Status-Daten umfassende Nutzdaten zum Abruf oder Empfang durch mehrere zweite Automatisierungsgeräte verfügbar. Vorzugsweise macht das erste Automatisierungsgerät die Nutzdaten entsprechend OPC UA Publish-Subscribe zum Empfang durch die zweiten Automatisierungsgeräte verfügbar. Die zweiten Automatisierungsgeräte sind beispielsweise Subscriber.

Erfindungsgemäß sendet das erste Automatisierungsgerät zyklisch erste Informationen zur Ankündigung verfügbarer Nutzdaten an eine vorgegebene erste Multicast-Adresse innerhalb des industriellen Automatisierungssystems. Die ersten Informationen können insbesondere als Tupel bereit gestellt werden. Darüber hinaus umfassen die ersten Informationen jeweils Angaben über das erste Automatisierungsgerät, eine zweite Multicast-Adresse, über die Angaben zu verfügbaren Nutzdaten verfügbar gemacht werden, und zweite Informationen zur Adressierung von Nutzdaten, mit denen das erste Automatisierungsgerät Nutzdaten verfügbar macht. Die die Angaben zu verfügbaren Nutzdaten können insbesondere Meta-Daten sein.

Die zweiten Automatisierungsgeräte, denen die erste Multicast-Adresse zugeordnet ist, filtern die ersten Informationen entsprechend dem erfindungsgemäßen Verfahren anhand jeweils ausgewählter Angaben und lesen aus ausgewählten ersten Informationen jeweils die zweite Multicast-Adresse und die zweiten Informationen aus. Des Weiteren rufen die zweiten Automatisierungsgeräte an die jeweils ausgelesene zweite Multicast-Adresse gesendete Angaben zu verfügbaren Nutzdaten ab bzw. empfangen diese. Außerdem rufen die zweiten Automatisierungsgeräte anhand der ausgelesenen zweiten Informationen ausgewählte Nutzdaten ab bzw. empfangen diese. Im Vergleich zu bisherigen Lösungen ist es mit dem erfindungsgemäßen Verfahren nicht erforderlich, dass erste und zweite Automatisierungsgeräte bzw. Publisher und Subscriber beispielsweise einen OPC UA Client-Server Stack implementieren. Darüber hinaus ist weder für Publisher noch für Subscriber eine Verbindung zu übergeordneten bzw. systemweiten Geräte- und Funktionssuchdienst (Discovery Service) notwendig.

Entsprechend einer bevorzugten Ausgestaltung der vorliegenden Erfindung umfassen die zweiten Informationen eine dritte Multicast-Adresse oder einen Datenstrom-Identifikator, über die bzw. den das erste Automatisierungsgerät Nutzdaten verfügbar macht. In diesem Fall lesen die zweiten Automatisierungsgeräte aus den ausgewählten ersten Informationen jeweils die dritte Multicast-Adresse, insbesondere eine UDP-Multicast-Adresse, oder den Datenstrom-Identifikator, insbesondere einen Stream Identificator entsprechend IEEE 802.1Qat, als zweite Informationen aus und rufen an die ausgelesenen dritten Multicast-Adressen oder Datenstrom-Identifikatoren gesendete ausgewählte Nutzdaten bzw. empfangen diese.

Vorzugsweise sind Kommunikationsbeziehungen zwischen dem ersten Automatisierungsgerät und den zweiten Automatisierungsgeräten verbindungslos. Insbesondere sendet ein Publisher bei dem Publish-Subscribe-Verfahren seine Daten verbindungslos ins Netzwerk, während viele Subscriber diese Daten empfangen können, ohne dass ressourcenintensive Verbindungen bestehen müssen. Entsprechend einer bevorzugten Ausgestaltung der vorliegenden Erfindung werden die ersten Informationen, die Angaben über verfügbare Nutzdaten bzw. die Nutzdaten entsprechend User Datagram Protocol (UDP) übermittelt.

Entsprechend einer weiteren vorteilhaften Ausgestaltung der vorliegenden Erfindung macht das erste Automatisierungsgerät Nutzdaten codiert verfügbar. In diesem Fall werden über die zweiten Multicast-Adressen jeweils zusätzlich dritte Informationen zur Decodierung von Nutzdaten verfügbar gemacht. Dabei rufen die zweiten Automatisierungsgeräte an die jeweils ausgelesene zweite Multicast-Adresse gesendete dritte Informationen ab bzw. empfangen diese. Anhand der dritten Informationen decodieren die zweiten Automatisierungsgeräte ausgewählte codierte Nutzdaten.

Auch entsprechend einer alternativen vorteilhaften Ausgestaltung der vorliegenden Erfindung ist vorgesehen, dass das erste Automatisierungsgerät Nutzdaten codiert verfügbar macht. Allerdings umfassen die ersten Informationen in diesem Fall Zugangsinformationen für einen Sicherheitsdienst, insbesondere einen Security Key Service, der dritte Informationen zur Decodierung von Nutzdaten verfügbar macht. Dementsprechend lesen die zweiten Automatisierungsgeräte aus den ausgewählten ersten Informationen jeweils zusätzlich die Zugangsinformationen aus. Anhand der durch den Sicherheitsdienst verfügbar gemachten dritten Informationen decodieren die zweiten Automatisierungsgeräte ausgewählte codierte Nutzdaten.

Die Angaben über das erste Automatisierungsgerät können beispielsweise eine PublisherID und eine WriterGroupID entsprechend OPC UA Publish-Subscribe umfassen. Auf diese Weise können die zweiten Automatisierungsgeräte die ersten Informationen anhand einer jeweils ausgewählten PublisherID bzw. WriterGroupID filtern.

Entsprechend einer weiteren vorteilhaften Ausgestaltung der vorliegenden Erfindung sendet ein ausgewähltes zweites Automatisierungsgerät eine Anforderung zur Übermittlung erster Informationen an die erste Multicast-Adresse. Auf diese Anforderung senden die zweiten Automatisierungsgeräte, denen die erste Multicast-Adresse zugeordnet ist, jeweils vorhandene erste Informationen an das ausgewählte zweite Automatisierungsgerät. Zusätzlich kann die Anforderung zur Übermittlung erster Informationen eine Angabe zweiter Automatisierungsgeräte umfassen, die zur Beantwortung der Anforderung ausgewählt sind. In diesem Fall senden nur die zur Beantwortung der Anforderung ausgewählten zweiten Automatisierungsgeräte jeweils vorhandene erste Informationen an das ausgewählte zweite Automatisierungsgerät.

Das erfindungsgemäße Automatisierungsgerät zur Bereitstellung von Steuerungs-, Mess- bzw. Status-Daten umfassenden Nutzdaten innerhalb eines industriellen Automatisierungssystems ist insbesondere als Publisher-Automatisierungsgerät zur Durchführung eines Verfahrens entsprechend vorangehenden Ausführungen geeignet. Dabei ist das Automatisierungsgerät als ein erstes Automatisierungsgerät innerhalb des industriellen Automatisierungssystems dafür ausgestaltet und eingerichtet, Steuerungs-, Mess- bzw. Status-Daten umfassende Nutzdaten zum Abruf oder Empfang durch mehrere zweite Automatisierungsgeräte verfügbar zu machen. Außerdem ist das Automatisierungsgerät dafür ausgestaltet und eingerichtet, zyklisch erste Informationen zur Ankündigung verfügbarer Nutzdaten an eine vorgegebene erste Multicast-Adresse innerhalb des industriellen Automatisierungssystems zu senden. Dabei umfassen die ersten Informationen jeweils Angaben über das Automatisierungsgerät, eine zweite Multicast-Adresse, über die Angaben zu verfügbaren Nutzdaten verfügbar sind, und zweite Informationen zur Adressierung von Nutzdaten.

Das erfindungsgemäße Automatisierungsgerät zum Abruf oder Empfang von Steuerungs-, Mess- bzw. Status-Daten umfassenden Nutzdaten innerhalb eines industriellen Automatisierungssystems ist insbesondere als Subscriber-Automatisierungsgerät zur Durchführung eines Verfahrens entsprechend vorangehenden Ausführungen geeignet. Das Automatisierungsgerät ist für eine Wechselwirkung mit einem ersten Automatisierungsgerät entsprechend vorangehenden Ausführungen vorgesehen und als ein zweites Automatisierungsgerät innerhalb des industriellen Automatisierungssystems dafür ausgestaltet und eingerichtet, die ersten Informationen anhand jeweils ausgewählter Angaben zu filtern und aus ausgewählten ersten Informationen jeweils die zweite Multicast-Adresse und die zweiten Informationen auszulesen. Außerdem ist das Automatisierungsgerät dafür ausgestaltet und eingerichtet, an die ausgelesenen zweiten Multicast-Adressen gesendete Angaben zu verfügbaren Nutzdaten abzurufen oder zu empfangen und anhand der ausgelesenen zweiten Informationen ausgewählte Nutzdaten abzurufen oder zu empfangen.

Die vorliegende Erfindung wird nachfolgend an einem Ausführungsbeispiel anhand der Zeichnung näher erläutert. Es zeigt
- Figur 1: ein mehrere Netzinfrastrukturgeräte und diesen zugeordnete Steuerungseinheiten umfassendes Kommunikationsnetz eines industriellen Automatisierungs-systems,
- Figur 2: einen Ablauf zur Datenübermittlung auf Basis von OPC UA Publish-Subscribe entsprechend dem Stand der Technik,
- Figur 3: einen Ablauf zur Datenübermittlung auf Basis von OPC UA Publish-Subscribe entsprechend der vorliegenden Erfindung.

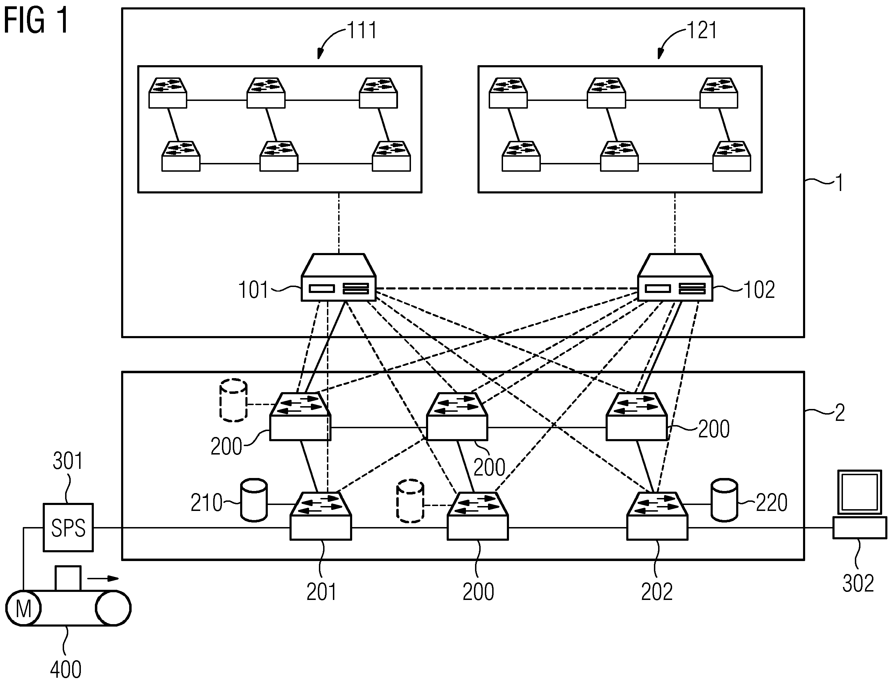

Das in Figur 1 dargestellte Kommunikationsnetz eines industriellen Automatisierungssystems umfasst mehrere Netzinfrastrukturgeräte 200-202 und mehrere Steuerungseinheiten 101, 102. Die Netzinfrastrukturgeräte 200-202 können beispielsweise Switche, Router oder Firewalls sein und zum Anschluss von speicherprogrammierbaren Steuerungen 301, Eingabe/Ausgabe-Einheiten (I/O-Module) oder Bedien- und Beobachtungsstationen 302 des industriellen Automatisierungssystems dienen. Speicherprogrammierbare Steuerungen 301 umfassen typischerweise jeweils ein Kommunikationsmodul, eine Zentraleinheit sowie zumindest eine Eingabe/Ausgabe-Einheit dar. Eingabe/Ausgabe-Einheiten können grundsätzlich auch als dezentrale Peripheriemodule ausgestaltet sein, die entfernt von einer speicherprogrammierbaren Steuerung angeordnet sind.

Über das Kommunikationsmodul ist eine speicherprogrammierbare Steuerung 301 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 301 und einer durch die speicherprogrammierbare Steuerung 301 gesteuerten Maschine oder Vorrichtung 401. Die Zentraleinheit ist insbesondere für eine Ermittlung geeigneter Steuerungsgrößen aus erfassten Messgrößen vorgesehen. Obige Komponenten der speicherprogrammierbaren Steuerung 301 sind im vorliegenden Ausführungsbeispiel über ein Rückwandbus-System miteinander verbunden.

Eine Bedien- und Beobachtungsstation 302 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 302 zur Anzeige von Werten eines Regelungskreises und zur Veränderung von Regelungsparametern verwendet. Bedien- und Beobachtungsstationen 302 umfassen zumindest eine graphische Benutzerschnittstelle, ein Eingabegerät, eine Prozessoreinheit und ein Kommunikationsmodul.

Die Netzinfrastrukturgeräte 200-202 sind im vorliegenden Ausführungsbeispiel einem Software Defined Network zugeordnet, das eine als Control Plane bezeichnete Kommunikationssteuerungsebene 1 und eine als Data Plane bezeichnete Datenübermittlungsebene 2 umfasst. Die Steuerungseinheiten 101, 102 als SDN-Controller sind der Control Plane zugeordnet, während die Netzinfrastrukturgeräte 200-202 der Data Plane zugeordnet sind. Durch die Steuerungseinheiten 101, 102 werden beispielsweise Flow-Tabellen für Switche oder Router vorgegeben, aus denen Routing-Regeln bzw. Forwarding-Regeln für der jeweiligen Steuerungseinheit 101, 102 zugeordnete Netzinfrastrukturgeräte 200-202 abgeleitet werden. Die Steuerungseinheiten 101, 102 steuern also Funktionen mehrerer zugeordneter Netzinfrastrukturgeräte 200-202. Darüber hinaus kann das Kommunikationsnetz in mehrere Partitionen, Network Slices, unterteilt sein, die vorgebbare Anteile an Systemressourcen von Netzinfrastrukturgeräten umfassen, die der jeweiligen Partition zugeordnet sind. In diesem Fall ermitteln die Steuerungseinheiten 101, 102 bei Kommunikationsdienst-Anforderungen Pfade innerhalb der jeweiligen Partition. Die Partitionen können beispielsweise mittels eines Engineering-Systems manuell durch einen Systemadministrator oder automatisiert festgelegt werden. Für jede Steuerungseinheit 101, 101 ist im vorliegenden Ausführungsbeispiel jeweils eine separate Ressourcensicht 111, 121 mit den Anteilen an Systemressourcen vorgesehen.

Im vorliegenden Ausführungsbeispiel sind jedem Netzinfrastrukturgerät 200-202 jeweils eine Haupt-Steuerungseinheit 101 und eine Reserve-Steuerungseinheit 102 zugeordnet. Die Haupt-Steuerungseinheit 101 und die Reserve-Steuerungseinheit 102 sind zueinander redundant. Insbesondere übernimmt die Haupt-Steuerungseinheit 101 dabei eine Master-Rolle, während der Reserve-Steuerungseinheit 102 eine Slave-Rolle zugewiesen wird. Die Steuerungseinheiten 101, 102 authentisieren sich vorzugsweise gegenüber den zugeordneten Netzinfrastrukturgeräten 200-202 und erhalten erst nach erfolgreicher Authentifizierung Steuerungszugriff auf die zugeordneten Netzinfrastrukturgeräte 200-202.

Mittels erster Automatisierungsgeräte, Publisher-Automatisierungsgeräte, werden Informationen bzw. Dienste zur Nutzung an zweiten Automatisierungsgeräten, Subscriber- Automatisierungsgeräten, bereitgestellt. Einem Automatisierungsgerät kann gleichzeitig sowohl eine Rolle als Publisher-Automatisierungsgerät als auch eine Rolle als Subscriber-Automatisierungsgerät zugeordnet werden, beispielsweise wenn es einerseits Automatisierungsdienste bereitstellt und andererseits Automatisierungsdienste anderer Geräte nutzt. Im vorliegenden Ausführungsbeispiel werden die Informationen bzw. Dienste mittels der Publisher-Automatisierungsgeräte entsprechend Open Platform Communications Unified Architecture Protokoll (OPC UA) zur Nutzung an den Subscriber-Automatisierungsgeräten bereitgestellt werden, insbesondere mittels OPC UA Publish-Subscribe.

Im vorliegenden Ausführungsbeispiel stellt die speicherprogrammierbare Steuerung 301 ein Publisher-Automatisierungsgerät dar, während die Bedien- und Beobachtungsstation 302 eine Rolle als Subscriber-Automatisierungsgerät wahrnimmt und insbesondere durch die speicherprogrammierbare Steuerung 301 bereitgestellte Informationen empfängt. Grundsätzlich könnte die Bedien- und Beobachtungsstation 302 von der speicherprogrammierbaren Steuerung 301 empfangene Informationen analysieren und hieraus Steuerungsparameter für die speicherprogrammierbare Steuerung 301 vorgeben. Somit würden sowohl die speicherprogrammierbare Steuerung 301 als auch die Bedien- und Beobachtungsstation beide Rollen wahrnehmen. Im Sinn einer vereinfachten Darstellung wird nachfolgend davon ausgegangen, dass beide Geräte jeweils nur eine zugeordnete Rolle aufweisen.

In Datenbanken 210, 220, die jeweils dem Netzinfrastrukturgerät 201, 202 zugeordnet sind, an das die speicherprogrammierbare Steuerung 301 bzw. die Bedien- und Beobachtungsstation 302 angeschlossen ist, werden jeweils
- Angaben zu Angeboten von Informationen und Diensten angeschlossener Publisher-Automatisierungsgerät und
- Angaben zu Anforderungen von Informationen und Diensten angeschlossener Subscriber-Automatisierungsgeräte gespeichert. Dabei können die Publisher- bzw. Subscriber-Automatisierungsgeräte jeweils entsprechend unterschiedlichen Kommunikationsprotokollen mit den Netzinfrastrukturgeräten kommunizieren, an die sie angeschlossen sind. Die Angaben zu den Angeboten und Anforderungen von Informationen und Diensten angeschlossener Publisher- und Subscriber-Automatisierungsgeräte werden im vorliegenden Ausführungsbeispiel einheitlich nach Topics gegliedert in den Datenbanken 210, 220 gespeichert. Dies vereinfacht eine Suche nach relevanten Angeboten bzw. Anforderungen.

Darüber hinaus werden die Datenbanken 210, 220 für die Steuerungseinheiten 101, 102 zum Zugriff verfügbar gemacht. Die Steuerungseinheiten 101, 102, insbesondere die Haupt-Steuerungseinheit 101, können beispielsweise anhand zueinander passender bzw. übereinstimmender Angebote und Anforderungen Zuordnungen zwischen den Publisher-Automatisierungsgeräten und den Subscriber-Automatisierungsgeräten erstellen und Pfade zwischen einander zugeordneten Publisher- und Subscriber-Automatisierungsgeräten ermitteln.

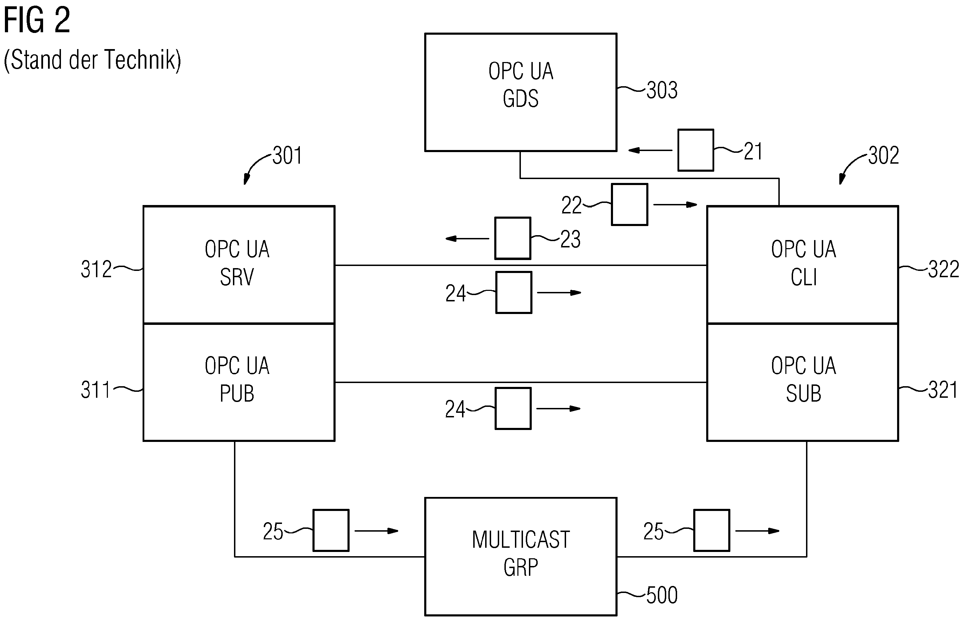

Bei dem in Figur 2 dargestellten Ablauf zur Datenübermittlung auf Basis von OPC UA Publish-Subscribe entsprechend dem Stand der Technik benötigt die Bedien- und Beobachtungsstation 302 als Subscriber-Automatisierungsgerät von der speicherprogrammierbaren Steuerung 301 als Publisher-Automatisierungsgerät Meta-Daten bzw. Angaben zu verfügbaren Nutzdaten. Dabei können die durch ein Publisher-Automatisierungsgerät an Subscriber-Automatisierungsgeräte bereitgestellten Nutzdaten insbesondere Steuerungs-, Mess- bzw. Status-Daten umfassen. Die Meta-Daten werden über eine spezielle UDP-Multicast-Gruppe 500 bzw. UDP-Multicast-Adresse regelmäßig bekannt gegeben.

Zusätzlich benötigt ein Subscriber-Automatisierungsgerät zum Abrufen bzw. Empfangen von Nutzdaten je nach verwendeten Kommunikationsnetz-Protokollen beispielsweise eine dem jeweiligen Publisher-Automatisierungsgerät zugeordnete UDP-Multicast-Adresse oder für Time Sensitive Networks einen Stream Identificator entsprechend IEEE 802.1Qat. Üblicherweise werden sowohl UDP-Multicast-Adressen als auch TSN Stream Identificators dynamisch vergeben und sind damit während eines Engineerings bzw. einer Projektierung nicht bekannt.

Um durch die speicherprogrammierbare Steuerung 301 als Publisher-Automatisierungsgerät bereitgestellte Nutzdaten abzurufen bzw. zu empfangen, sendet die Bedien- und Beobachtungsstation 302 als Subscriber-Automatisierungsgerät eine Anforderung 21 zur Übermittlung eines Endpunkt-URL (Uniform Resource Locator) an einem Server 303 eines OPC UA Global Discovery Service (GDS). Hierzu spezifiziert das Subscriber-Automatisierungsgerät insbesondere eine PublisherID des jeweiligen Publisher-Automatisierungsgeräts. Die PublisherID kann beipielsweise neben einer dem jeweiligen Publisher-Automatisierungsgerät zugeordneten WriterGroupID im Subscriber-Automatisierungsgerät konfiguriert sein.

Nach Übermittlung des Endpunkt-URL 22 baut das Subscriber-Automatisierungsgerät mittels eines OPC UA Client 322 eine Client-Server-Verbindung zu einem OPC UA Server 312 des jeweiligen Publisher-Automatisierungsgeräts auf. Über diese Client-Server-Verbindung sendet das Subscriber-Automatisierungsgerät eine Anforderung 23 zur Übermittlung der durch das Publisher-Automatisierungsgerät verwendeten UDP-Multicast-Adressen bzw. des Stream Identificators. Zusätzlich kann das Subscriber-Automatisierungsgerät auch eine Security Group ID über die Client-Server-Verbindung abfragen.

Sobald das Subscriber-Automatisierungsgerät vom Publisher-Automatisierungsgerät angeforderte Informationen 24 zur Adressierung von Nutzdaten und Meta-Daten über die Client-Server-Verbindung empfängt, kann sich das Subscriber-Automatisierungsgerät mittels einer OPC UA Subscriber-Komponente 321 mit der UDP-Multicast-Gruppe 500 verbinden, an die durch eine OPC UA Publisher-Komponente 311 des Publisher-Automatisierungsgeräts die Nutzdaten beschreibende Meta-Daten 25 bereitgestellt werden. Bei zusätzlichen Sicherheitsanforderungen kann das Subscriber Automatisierungsgerät bei einem Security Key Service nach erfolgreicher Autorisierung unter Nennung o.g. Security Group ID Schlüsselmaterial zum Entschlüsseln der Nutzdaten abrufen. Abschließend empfängt das Subscriber-Automatisierungsgerät über die UDP-Multicast-Adresse für Nutzdaten bzw. mittels des Stream Identificators Nutzdaten-Telegramme 26 vom Publisher-Automatisierungsgerät und decodiert diese anhand der Meta-Daten 25.

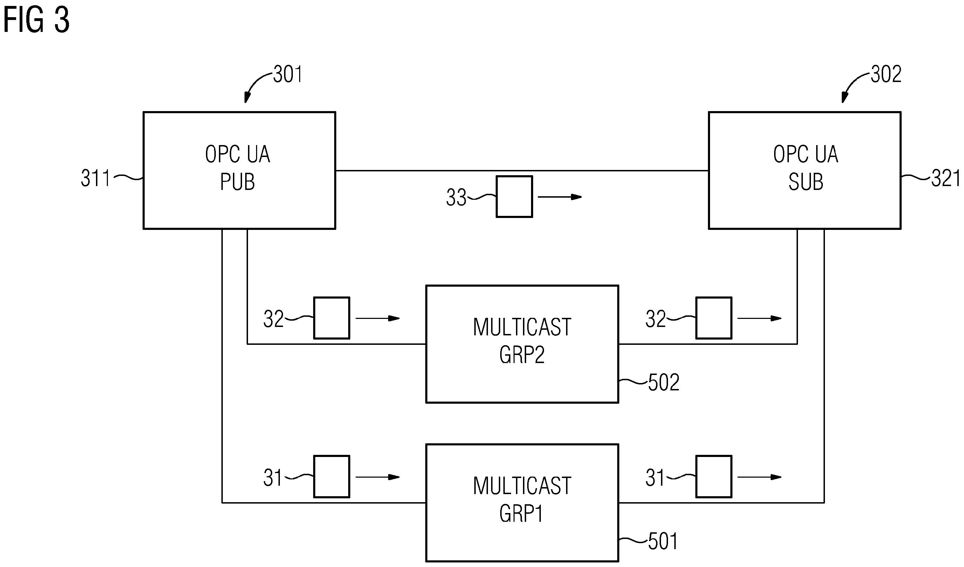

Entsprechend Figur 3 macht ein Publisher-Automatisierungsgerät bzw. dessen OPC UA Publisher-Komponente 311 Steuerungs-, Mess- bzw. Status-Daten umfassende Nutzdaten zum Abruf oder Empfang durch mehrere Subscriber-Automatisierungsgeräte bzw. deren OPC UA Subscriber-Komponenten 321 verfügbar, indem das Publisher-Automatisierungsgerät zyklisch erste Informationen 31 zur Ankündigung verfügbarer Nutzdaten an eine vorgegebene erste Multicast-Adresse bzw. Multicast-Gruppe 501 innerhalb des industriellen Automatisierungssystems sendet. Die ersten Informationen 31 umfassen jeweils Angaben über das Publisher-Automatisierungsgerät, eine zweite Multicast-Adresse bzw. Multicast-Gruppe 502, über die Meta-Daten zu verfügbaren Nutzdaten verfügbar gemacht werden, und eine Nutzdaten-Multicast-Adresse oder einen Datenstrom-Identifikator umfassen, über die bzw. den das erste Automatisierungsgerät Nutzdaten verfügbar macht. Die Nutzdaten-Multicast-Adresse bzw. der Datenstrom-Identifikator stehen hier lediglich exemplarisch für Informationen zur Adressierung von Nutzdaten, mit denen das Publisher-Automatisierungsgerät Nutzdaten verfügbar macht.

Die Angaben über das Publisher-Automatisierungsgerät 301 umfassen im vorliegenden Ausführungsbeispiel eine PublisherID und eine WriterGroupID entsprechend OPC UA Publish-Subscribe. Darüber hinaus sind Nutzdaten-Multicast-Adressen vorzugsweise UDP-Multicast-Adressen, während Datenstrom-Identifikatoren vorteilhafterweise Stream Identificators entsprechend IEEE 802.1Qat sind. Subscriber-Automatisierungsgeräte, die der ersten Multicast-Gruppe 501 zugeordnet sind, filtern die ersten Informationen 31 insbesondere anhand einer jeweils ausgewählten PublisherID bzw. WriterGroupID und lesen aus ausgewählten ersten Informationen jeweils die zweite Multicast-Adresse und die Nutzdaten-Multicast-Adresse bzw. den Datenstrom-Identifikator aus.

Im vorliegenden Ausführungsbeispiel macht das Publisher-Automatisierungsgerät Nutzdaten codiert verfügbar. Dabei wird über die zweite Multicast-Gruppe 502 zusätzlich Schlüsselmaterial zur Decodierung von Nutzdaten als Teil der Meta-Daten verfügbar gemacht. Somit kann die OPC UA Subscriber-Komponente 321 des Subscriber-Automatisierungsgeräts an die ausgelesene zweite Multicast-Adresse bzw. an die zweite Multicast-Gruppe 502 gesendete Meta-Daten 32 sowie von diesen umfasstes Schlüsselmaterial abrufen bzw. empfangen. Abschließend ruft das Subscriber-Automatisierungsgerät an ausgelesene Nutzdaten-Multicast-Adressen bzw. Datenstrom-Identifikatoren gesendete ausgewählte Nutzdaten 33 ab bzw. empfängt diese und decodiert ausgewählte codierte Nutzdaten anhand des von den Meta-Daten umfassten Schlüsselmaterials.

Besonders vorteilhaft entsprechend dem vorliegenden Ausführungsbeispiel ist, dass Kommunikationsbeziehungen zwischen Publisher-Automatisierungsgeräten und Subscriber-Automatisierungsgeräten verbindungslos sind. Somit kann ein aufwendiger Aufbau von OPC UA Client-Server-Verbindungen bzw. Transportschicht-Verbindungen, wie TCP-Verbindungen, entfallen. Vorzugsweise werden die ersten Informationen 31, die Meta-Daten 32 und die Nutzdaten 33 entsprechend User Datagram Protocol übermittelt.

Alternativ zu einer Bereitstellung von Schlüsselmaterial als Teil der Meta-Daten 32 können mit den ersten Informationen 31 Zugangsinformationen für einen Security Key Service übermittelt werden, der Schlüsselmaterial zur Decodierung von Nutzdaten verfügbar macht. In diesem Fall lesen Subscriber-Automatisierungsgeräte aus den ausgewählten ersten Informationen jeweils zusätzlich die Zugangsinformationen aus und decodieren nach einer erfolgreichen Autorisierung ausgewählte codierte Nutzdaten anhand des durch den Security Key Service verfügbar gemachten Schlüsselmaterials.

Entsprechend einer weiteren vorteilhaften Ausgestaltung können Subscriber-Automatisierungsgeräte eine Solicitation-Nachrichten zur Übermittlung erster Informationen 31 an die erste Multicast-Gruppe 501 senden. Andere Subscriber-Automatisierungsgeräte innerhalb der ersten Multicast-Gruppe 501 können auf Solicitation-Nachrichten antworten, indem sie ihre jeweils lokal vorhandenen ersten Informationen an anfragende Subscriber-Automatisierungsgeräte senden. In den Solicitation-Nachrichten können beispielsweise Subscriber-Automatisierungsgeräte angegeben sein, die zur Beantwortung der jeweiligen Solicitation-Nachricht ausgewählt bzw. berechtigt sind. In diesem Fall senden nur die zur Beantwortung der Anforderung ausgewählten bzw. berechtigten Subscriber-Automatisierungsgeräte jeweils vorhandene erste Informationen an das jeweils anfragende Subscriber-Automatisierungsgerät.

## Patentansprüche

1. Verfahren zur Datenübermittlung innerhalb eines industriellen Automatisierungssystems, bei dem
- zumindest ein erstes Automatisierungsgerät (301) innerhalb des industriellen Automatisierungssystems Steuerungs-, Mess- und/oder Status-Daten umfassende Nutzdaten (33) zum Abruf oder Empfang durch mehrere zweite Automatisierungsgeräte (302) verfügbar macht,
- das erste Automatisierungsgerät zyklisch erste Informationen (31) zur Ankündigung verfügbarer Nutzdaten an eine vorgegebene erste Multicast-Adresse innerhalb des industriellen Automatisierungssystems sendet,
- die ersten Informationen (31) jeweils Angaben über das erste Automatisierungsgerät (301), eine zweite Multicast-Adresse, über die Angaben (32) zu verfügbaren Nutzdaten verfügbar gemacht werden, und zweite Informationen zur Adressierung von Nutzdaten umfassen, mit denen das erste Automatisierungsgerät (301) Nutzdaten (33) verfügbar macht,
- die zweiten Automatisierungsgeräte (302), denen die erste Multicast-Adresse zugeordnet ist, die ersten Informationen (31) anhand jeweils ausgewählter Angaben filtern und aus ausgewählten ersten Informationen jeweils die zweite Multicast-Adresse und die zweiten Informationen auslesen,
- die zweiten Automatisierungsgeräte (302) an die jeweils ausgelesene zweite Multicast-Adresse gesendete Angaben (32) zu verfügbaren Nutzdaten abrufen oder empfangen,
- die zweiten Automatisierungsgeräte (302) anhand der ausgelesenen zweiten Informationen ausgewählte Nutzdaten abrufen oder empfangen.

2. Verfahren nach Anspruch 1,
bei dem die zweiten Informationen eine dritte Multicast-Adresse oder einen Datenstrom-Identifikator umfassen, über die/den das erste Automatisierungsgerät Nutzdaten verfügbar macht, bei dem die zweiten Automatisierungsgeräte aus den ausgewählten ersten Informationen jeweils die dritte Multicast-Adresse oder den Datenstrom-Identifikator als zweite Informationen auslesen und bei dem die zweiten Automatisierungsgeräte an die ausgelesenen dritten Multicast-Adressen oder Datenstrom-Identifikatoren gesendete ausgewählte Nutzdaten abrufen oder empfangen.

3. Verfahren nach Anspruch 2,
bei dem die dritten Multicast-Adressen jeweils UDP-Multicast-Adressen sind und/oder bei dem die Datenstrom-Identifikatoren jeweils Stream Identificators entsprechend IEEE 802.1Qat sind.

4. Verfahren nach einem der Ansprüche 1 bis 3,
bei dem Kommunikationsbeziehungen zwischen dem ersten Automatisierungsgerät und den zweiten Automatisierungsgeräten verbindungslos sind.

5. Verfahren nach Anspruch 4,
bei dem die ersten Informationen, die Angaben über verfügbare Nutzdaten und/oder die Nutzdaten entsprechend User Datagram Protocol übermittelt werden.

6. Verfahren nach einem der Ansprüche 1 bis 5,
bei dem das erste Automatisierungsgerät Nutzdaten codiert verfügbar macht, bei dem über die zweiten Multicast-Adressen jeweils dritte Informationen zur Decodierung von Nutzdaten verfügbar gemacht werden, bei dem die zweiten Automatisierungsgeräte an die jeweils ausgelesene zweite Multicast-Adresse gesendete dritte Informationen abrufen oder empfangen und bei dem die zweiten Automatisierungsgeräte ausgewählte codierte Nutzdaten anhand der dritten Informationen decodieren.

7. Verfahren nach einem der Ansprüche 1 bis 5,
bei dem das erste Automatisierungsgerät Nutzdaten codiert verfügbar macht, bei dem die ersten Informationen Zugangsinformationen für einen Sicherheitsdienst umfassen, der dritte Informationen zur Decodierung von Nutzdaten verfügbar macht, bei dem die zweiten Automatisierungsgeräte aus den ausgewählten ersten Informationen jeweils zusätzlich die Zugangsinformationen auslesen und bei dem die zweiten Automatisierungsgeräte ausgewählte codierte Nutzdaten anhand der durch den Sicherheitsdienst verfügbar gemachten dritten Informationen decodieren.

8. Verfahren nach einem der Ansprüche 1 bis 7,
bei dem das erste Automatisierungsgerät die Nutzdaten entsprechend OPC UA Publish-Subscribe zum Empfang durch die zweiten Automatisierungsgeräte verfügbar macht.

9. Verfahren nach einem der Ansprüche 1 bis 8,
bei dem die Angaben über das erste Automatisierungsgerät eine PublisherID und eine WriterGroupID entsprechend OPC UA Publish-Subscribe umfassen.

10. Verfahren nach Anspruch 9,
bei dem die zweiten Automatisierungsgeräte die ersten Informationen anhand einer jeweils ausgewählten PublisherID und/oder WriterGroupID filtern.

11. Verfahren nach einem der Ansprüche 1 bis 10,
bei dem die Angaben zu verfügbaren Nutzdaten Meta-Daten sind.

12. Verfahren nach einem der Ansprüche 1 bis 11,
bei dem ein ausgewähltes zweites Automatisierungsgerät eine Anforderung zur Übermittlung erster Informationen an die erste Multicast-Adresse sendet und bei dem die zweiten Automatisierungsgeräte, denen die erste Multicast-Adresse zugeordnet ist, auf die Anforderung jeweils vorhandene erste Informationen an das ausgewählte zweite Automatisierungsgerät senden.

13. Verfahren nach Anspruch 12,
bei dem die Anforderung zur Übermittlung erster Informationen eine Angabe zweiter Automatisierungsgeräte umfasst, die zur Beantwortung der Anforderung ausgewählt sind, und bei dem nur die zur Beantwortung der Anforderung ausgewählten zweiten Automatisierungsgeräte jeweils vorhandene erste Informationen an das ausgewählte zweite Automatisierungsgerät senden.

14. Automatisierungsgerät zur Bereitstellung von Steuerungs-, Mess- und/oder Status-Daten umfassenden Nutzdaten innerhalb eines industriellen Automatisierungssystems, bei dem
- das Automatisierungsgerät als ein erstes Automatisierungsgerät innerhalb des industriellen Automatisierungssystems dafür ausgestaltet und eingerichtet ist, Steuerungs-, Mess- und/oder Status-Daten umfassende Nutzdaten zum Abruf oder Empfang durch mehrere zweite Automatisierungsgeräte verfügbar zu machen,
- das Automatisierungsgerät dafür ausgestaltet und eingerichtet ist, zyklisch erste Informationen zur Ankündigung verfügbarer Nutzdaten an eine vorgegebene erste Multicast-Adresse innerhalb des industriellen Automatisierungssystems zu senden,
- wobei die ersten Informationen jeweils Angaben über das Automatisierungsgerät, eine zweite Multicast-Adresse, über die Angaben zu verfügbaren Nutzdaten verfügbar sind, und zweite Informationen zur Adressierung von Nutzdaten umfassen.

15. Automatisierungsgerät zum Abruf oder Empfang von Steuerungs-, Mess- und/oder Status-Daten umfassenden Nutzdaten innerhalb eines industriellen Automatisierungssystems, bei dem
- zumindest ein erstes Automatisierungsgerät innerhalb des industriellen Automatisierungssystems dafür ausgestaltet und eingerichtet ist, Steuerungs-, Mess- und/oder Status-Daten umfassende Nutzdaten zum Abruf oder Empfang durch mehrere zweite Automatisierungsgeräte verfügbar zu machen und zyklisch erste Informationen zur Ankündigung verfügbarer Nutzdaten an eine vorgegebene erste Multicast-Adresse innerhalb des industriellen Automatisierungssystems zu senden, wobei die ersten Informationen jeweils Angaben über das Automatisierungsgerät, eine zweite Multicast-Adresse, über die Angaben zu verfügbaren Nutzdaten verfügbar sind, und zweite Informationen zur Adressierung von Nutzdaten umfassen,
- das Automatisierungsgerät als ein zweites Automatisierungsgerät innerhalb des industriellen Automatisierungssystems dafür ausgestaltet und eingerichtet ist, die ersten Informationen anhand jeweils ausgewählter Angaben zu filtern und aus ausgewählten ersten Informationen jeweils die zweite Multicast-Adresse und die zweiten Informationen auszulesen,
- das Automatisierungsgerät dafür ausgestaltet und eingerichtet ist, an die ausgelesenen zweiten Multicast-Adressen gesendete Angaben zu verfügbaren Nutzdaten abzurufen oder zu empfangen,
- das Automatisierungsgerät dafür ausgestaltet und eingerichtet ist, anhand der ausgelesenen zweiten Informationen ausgewählte Nutzdaten abzurufen oder zu empfangen.
